# EUROPEAN PATENT SPECIFICATION

(11) **EP 3 108 060 B1**
(45) Date of publication and mention of the grant of the patent: **07.04.2021**
(21) Application number: 15751739.2
(22) Date of filing: 18.02.2015
(51) Int. Cl.: D21H 27/30, B31F 5/00, D21H 11/18, D21H 27/32, D21F 11/00, B32B 5/20, B32B 5/32, B32B 17/12, D21H 17/40, D21H 21/18, D21H 21/56, B32B 7/12, B32B 23/18, D21H 27/40

(54) **METHOD FOR PRODUCING A FOAM-FORMED INSULATION MATERIAL**
VERFAHREN ZUR HERSTELLUNG EINES SCHAUMGEFORMTEN ISOLIERMATERIALS
PROCÉDÉ DE PRODUCTION DE MATÉRIAU D'ISOLATION SOUS FORME DE MOUSSE

(30) Priority: 18.02.2014 SE 1450189
(43) Date of publication of application: 28.12.2016
(73) Proprietor: Stora Enso Oyj, 00101 Helsinki (FI)
(72) Inventor: HEISKANEN, Isto, FI-55100 Imatra (FI); RÄSÄNEN, Jari, FI-55420 Imatra (FI); PYNNÖNEN, Janne, FI-LEMPÄÄLÄ 37550 (FI); KAUPPINEN, Raino, FI-LAPPEENRANTA 53100 (FI)
(74) Representative: Steinrud, Henrik
(86) International application number: PCT/IB2015/051230
(87) International publication number: WO 2015/125083

(56) References cited:
- EP-A2- 0 546 956
- WO-A1-2013/144449
- WO-A1-2013/160553
- WO-A1-2013/160564
- CA-A- 745 071
- GB-A- 2 091 305
- GB-A- 2 478 331
- JP-A- H0 626 000
- JP-A- 2013 100 637
- US-A- 5 462 623
- US-A- 5 612 385
- US-A1- 2002 176 980
- US-A1- 2009 068 430
- US-A1- 2012 219 816
- US-B1- 6 616 802

## Description

The present invention relates to a method for producing a foam-formed insulation material for a building construction.

The invention further relates to a foam-formed insulation material for a building construction.

A foam-formed insulation material, i.e. an insulation material formed of from a foam is well known to use in building constructions to insulate walls, roofs doors etc. These foam-formed insulation materials are very bulky, typically with a thickness about 25-150 mm. This means that the transport costs for the insulation material becomes high. Therefore is the production of foam-formed insulation material normally located nearly the end user, typically not far away than about 150 km.

Additionally, the conventional manufacturing of foam-formed insulation materials are a slow process and not suitable for a large scale production.

Moreover, the manufacturing of the insulation material requires special formation methods and materials. The use of foam containing high amounts of carrier liquids (water), such water causes problems with drying. This reduces the production speed due to limited drying.

Furthermore, the manufacturing of insulation materials usually requires high investments. The manufacturing of tailored insulation materials is difficult in both small and large volumes with existing production methods.

WO 2013/14449 A1 discloses a method for manufacture a composite structure comprising peat moss wherein the method comprising the steps of forming a foamed dispersion, forming a sheet and drying the sheet.

US 5,612,385 discloses a method for producing a dry fibrous foam, comprising the steps of adding fibrous material; foaming agent, stabilizer and water to a vessel; forming fibrous slurry composition; agitating the fibrous slurry composition to incorporate gas and drying said aerated fibrous slurry composition.

WO 2013/160553 A1 discloses a method for preparation of a fibrous web of paper or board, comprising the steps of providing a foam of water and a surfactant; incorporating MFC and pulp into the foam; dewatering the foam to form a web and subjecting the web to drying.

An object of the present invention is to provide a new method for producing a foam-formed insulation material which overcomes the above mentioned drawbacks.

In the following description of the invention the term "natural fibres" will be used. In this context the term comprises wood fibres, botanical fibres, and/or their derivate or their mixtures.

Moreover, the term "foam" or "wet foam" will be frequently used. Wet foam comprises a mixture of natural fibres, liquid and at least one additive.

The liquid of the wet foam may be water or blends of water with various volatile solvents. Moreover, the liquid may be a totally solvent based liquid, such as methanol, ethanol, toluene etc.

The additives enhance the foam creation and many combinations of additives are possible. Particularly preferred additives have been showed to be:
- tensides for making foam and increasing bulk (as it reduce fiber to fiber bonding, it increase bulk),
- strength additives (e.g. starch, especially nanocellulose/microfibrillated cellulose (MFC)) and
- retention additives (e.g. cationic starch, cationic retention chemicals, micro particles).

However, the skilled person realizes that several variants of "foam creating" additives are possible.

The description further involves the term "foam web". In this context the term comprises a thin foam web made from mentioned wet foam. The foam web has a thickness of 0.3-2 mm.

The inventive method is characterized in that the method comprising the steps of:
- mixing wood fibres, liquid, tensides, strength additives preferably starch or microfibrillated cellulose and retention additives preferably cationic starch to form a wet foam,
- feeding the wet foam to a head box,
- distributing the wet foam on a moving wire, such that, the wet foam forms a foam web on the wire,
- pressing liquid out of the foam web,
- drying the foam web, wherein the dried foam web has a thickness of 0.3-2 mm, and
- bonding several foam webs together to form the foam-formed insulation material, with a thickness of at least 25 mm, wherein the bonding is performed by gluing or with water jet.

In the following, the invention will be described further with reference to the drawings, wherein:
Figure 1 shows a schematic illustration of an apparatus arrangement in a paper machine for forming a foam web.
Figure 2 shows a schematic illustration a foam-formed insulation material, in accordance with the invention, where the insulation material is formed by several foam webs which are applied together.

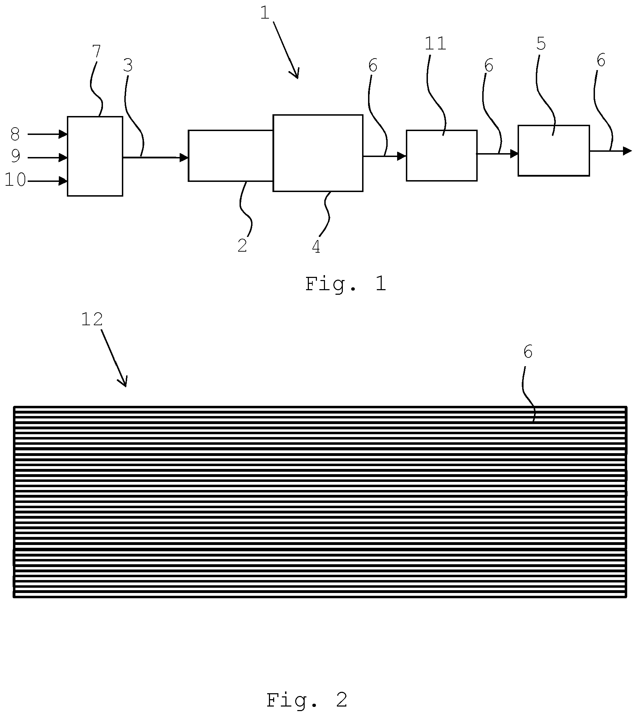

The apparatus arrangement 1 in Fig. 1 comprises a mixing reactor 7 for mixing wet foam 3. The arrangement further comprises a forming section 2, 4, 5, 11 to form a foam web 6 from the wet foam 3.

The mixing reactor 7 comprises feeding means 8, 9, 10 to add natural fibres 8, liquid 9 and additives 10 to the mixing reactor 7. The reactor comprises mixing means (not shown in Fig. 1) for mixing the natural fibres 8, liquid 9 and additives 10 to form the wet foam 3. The wet foam 3 is then transported to a headbox 2. Preferably, the distance between the mixing reactor 7 and headbox 2 is minimised, preferably the distance does not exceed 1-3 m.

The headbox 2 uniformly distributes the wet foam 3 on to a moving wire 4, such that, a foam web 6 is formed on the moving wire 4. On the wire 4 the foam web 6 becomes dewatered/densified. The wire 4 may be a single wire or a twin-wire where the foam is located between the twin-wire.

The wire 4 section may involve a suction box (not shown in figure) in order to densify the foam further.

The headbox 2 may be a single-layer headbox or a multilayer headbox. A single-layer headbox distributes a single-layer foam web 6 on to the moving wire 4, wherein the foam web 6 comprising the wet foam 3. A multi-layer headbox distributes a multi-layer foam web on the moving wire 4, wherein at least one of the layers comprising the wet foam 3. The other layers in the multi-layer web may origin from a foam suspension with the same composition as the wet foam 3 or a foam suspension with another composition with other properties than the wet foam 3. The other layers may also origin from a non-foam suspension, such as, for example a fibre suspension 1 comprising natural fibres and liquid, or other suspensions comprising synthetic or unnatural fibres, such as acrylic, polyester, rayon, nylon etc.

By using various web speeds, and adjustments in the headbox 2 (solids content, chemicals, gas amount), various properties and thicknesses of foam can be created. By using various crosslinking additives it is possible to create various types of properties in the foam web from soft rubber-like to hard brittle structures for various applications, e.g. fibre structures that can carry load in high humidity conditions. Also materials with various absorption and adsorption properties may be created i.e. induce e.g. hydrophobic and/or hydrophilic properties for various amphoteric materials and combinations with chosen polymers.

The foam web 6 is transported by the wire 4 to the pressing section 11. The pressing section 11 comprises at least one press 11, which presses liquid out of the foam web 6. The pressed web 6 is then transported to the drying section 5 for drying the foam web. The drying section 5 may comprise a hot drying cylinder 5, an IR (infra-red) heater 5, and/or hot air blowing dryers 5.

The dried foam web 6 has a thickness of 0.3-2 mm.

An inventive foam-formed insulation material 12 is then formed by bonding several dried foam webs 6 together. Preferably, the foam webs are bonded together by gluing. The foam-formed insulation material 12 has typically a thickness between 25-150 mm, but only handling is limiting.

One part of the inventive step is that the sheets are glued together with a MFC or NFC (Microfibrillated cellulose or nanocellulose) type of materials. However, this invention is not limited to MFC glue. It is important that the gluing does not reduce bulk of the substrate. Therefore, gluing with foam technology could be one option. The glue could also be coated locally or partially.

Another option to fix the sheets together is to use glue less method, i.e. water jet or similar to puncture the sheets.

In an alternative embodiment of the invention the method further comprising a step of fluting (corrugating) the sheets before they are bonded together. This will increase the bulkiness of the foam-formed insulation board even further.

The invention may create various foam web types fast and accurately consisting of various components and containing natural minerals and even, if needed, unorganic materials to provide new types of materials into building needs, such as insulation, soundproofing, heat/fire retardant materials etc.

By making a thin paper-like foam web made with the foaming technology, a very bulky sheet can be made. This foam web can further be either sheeted or cut into narrow web and further laminated to multilayer structure. The lamination needs to be done since very thick and bulky materials cannot be made in one single step. By making low grammage materials on a paper machine, it is possible to avoid the problem with dewatering and collapse of structure that is expected if making heavy grammage substrates with the foaming technology.

The inventive method by forming the foam-insulation material by bonding thin foam webs together enable to tailor made different insulation material from limited amount of roll form raw materials. For example, the top and bottom layers could be normal paper/board, which would then enable good printing/brightness and less air permeable structure. Moreover, top and bottom ply could be aluminum or any roll materials. Furthermore, it would be possible to use liquid packaging board type layers in the top and/or bottom layer (with polymer coating on the surface), the structure will hold direct water out. This is an advantage in for example wall installations.

Compared to prior-art production of foam-formed insulation material, the inventive method of producing the foam-formed insulation material has some major benefits, such as:
- The method enables to use existing paper/board in the production machines. Compared to conventional method this method as a much higher production capacity (ton/h or m³/h) can be gained with lower grammage thanks to the drying efficiency is much better.
- If the material/fibres are selected right, this material can be transported in compressed form, thus less transport costs.
- The inventive method enables it is further possible to tailor-made the insulation materials having different properties, such as wind protection, fire resistance, bacterial resistance (biocide), variable dimensions.
- During sheeting, it is possible to add features to the product such as waves, micro fluting, etc. which then can be used to adjust thickness or control strength.

## Claims

1. Method for producing a foam-formed insulation material for building constructions, **characterized in that** the method comprising the step of:
- mixing wood fibres (8), liquid (9), tensides (10), strength additives (10) preferably starch or microfibrillated cellulose and retention additives preferably cationic starch to form a wet foam (3),
- feeding the wet foam (3) to a head box (2),
- distributing the wet foam (3) on a moving wire (4), such that, the wet foam (3) forms a foam web (6) on the wire (4),
- pressing liquid out of the foam web (6),
- drying the foam web (6), wherein the dried foam web has a thickness of 0.3-2 mm, and
- bonding several foam webs (6) together to form the foam-formed insulation material, with a thickness of at least 25 mm, wherein the bonding is performed by gluing or with water jet.

2. Method according to claim 1, **characterized in that** the bonding step above further comprising a step of bonding at least one thin web with a different properties than the other foam webs (6).

3. Method according to any of claims 1-2, **characterized in that** the method further comprising the step of fluting the thin webs before they are bonded together.

4. Foam-formed insulation material for building constructions, **characterized in that** the insulation is obtained by the method in accordance with claims 1-3.

## Patentansprüche

1. Verfahren zur Herstellung eines schaumförmigen Isolationsmaterials für Baukonstruktionen, **dadurch gekennzeichnet, dass** das Verfahren die folgenden Schritte umfasst:
- Mischen von Holzfasern (8), Flüssigkeit (9), Tensiden (10), Festigkeitsadditiven (10), vorzugsweise Stärke oder mikrofibrillierte Cellulose und Retentionsadditiven, vorzugsweise kationischer Stärke zum Formen eines nassen Schaums (3),
- Zuführung des nassen Schaums (3) zu einem Stoffauflaufkasten (2),
- Verteilen des nassen Schaums (3) auf einem sich bewegenden Drahtsieb (4), sodass der nasse Schaum (3) ein Schaumnetz (6) auf dem Drahtsieb (4) bildet,
- Auspressen der in dem Schaumnetz (6) enthaltenen Flüssigkeit,
- Trocknen des Schaumnetzes (6), wobei das getrocknete Schaumnetz eine Dicke von 0,3-2 mm aufweist, und
- Verbinden mehrerer Schaumnetze (6) miteinander, um das schaumförmige Isolationsmaterial mit einer Dicke von mindestens 25 mm zu bilden, wobei das Verbinden durch Kleben oder per Wasserstrahl erfolgt.

2. Verfahren nach Anspruch 1, **dadurch gekennzeichnet, dass** der vorstehende Verbindungsschritt ferner einen Schritt des Verbindens mindestens eines dünnen Netzes mit anderen Eigenschaften als die anderen Schaumnetze (6) umfasst.

3. Verfahren nach einem der Ansprüche 1-2, **dadurch gekennzeichnet, dass** das Verfahren ferner den Schritt des Rillens der dünnen Netze umfasst, bevor diese miteinander verbunden werden.

4. Schaumförmiges Isolationsmaterial für Baukonstruktionen, **dadurch gekennzeichnet, dass** die Isolation durch das Verfahren gemäß den Ansprüchen 1-3 erhalten wird.

## Revendications

1. Procédé de production d'un matériau isolant formé en mousse pour des constructions de bâtiment, **caractérisé en ce que** le procédé comprend les étapes consistant à :
- mélanger des fibres de bois (8), un liquide (9), des tensioactifs (10), des additifs de résistance (10) de préférence de l'amidon ou de la cellulose microfibrillée et des additifs de rétention de préférence de l'amidon cationique pour former une mousse humide (3),
- alimenter la mousse humide (3) dans une caisse de tête (2),
- distribuer la mousse humide (3) sur un fil mobile (4), de sorte que la mousse humide (3) forme une nappe de mousse (6) sur le fil (4),
- presser le liquide hors de la nappe de mousse (6),
- sécher la nappe de mousse (6), dans lequel la nappe de mousse séchée a une épaisseur de 0,3-2 mm, et
- lier plusieurs nappes de mousse (6) ensemble pour former le matériau isolant formé en mousse, avec une épaisseur d'au moins 25 mm, dans lequel la liaison est réalisée par collage ou par jet d'eau.

2. Procédé selon la revendication 1, **caractérisé en ce que** l'étape de liaison ci-dessus comprend en outre une étape de liaison d'au moins une nappe mince avec des propriétés différentes des autres nappes de mousse (6).

3. Procédé selon l'une quelconque des revendications 1-2, **caractérisé en ce que** le procédé comprend en outre l'étape consistant à canneler les nappes minces avant qu'elles soient liées ensemble.

4. Matériau isolant formé en mousse pour des constructions de bâtiment, **caractérisé en ce que** l'isolation est obtenue par le procédé selon les revendications 1-3.
